# EUROPEAN PATENT SPECIFICATION

(11) **EP 2 641 110 B1**
(45) Date of publication and mention of the grant of the patent: **16.10.2019**
(21) Application number: 11785155.0
(22) Date of filing: 14.11.2011
(51) Int. Cl.: G01V 3/08

(54) **APPARATUS FOR DETECTING THE PRESENCE OF CATTLE IN STOCK FARMING**
VORRICHTUNG ZUR DETEKTION DER ANWESENHEIT VON VIEH IN VIEHHALTUNG
APPAREIL POUR DÉTECTER LA PRÉSENCE D'UN ANIMAL DANS UNE FERME D'ÉLEVAGE

(30) Priority: 15.11.2010 NL 2005696
(43) Date of publication of application: 25.09.2013
(73) Proprietor: Nedap N.V., 7141 DC Groenlo (NL)
(72) Inventor: VAN BRANDENBURG, Wilhelmus Arnoldus Bernardus Maria, 6921 TH Duiven (NL); SCHÄPERCLAUS, Edwin, 7161 HH Neede (NL); VAN DIJK, Jeroen Martin, 7543 ER Enschede (NL)
(74) Representative: V.O.
(86) International application number: PCT/NL2011/050778
(87) International publication number: WO 2012/067504

(56) References cited:
- EP-A2- 0 748 586
- WO-A1-93/08356
- WO-A1-2007/064202
- DE-A1- 19 803 641
- JP-A- 9 269 379
- JP-A- 2005 065 606
- US-A1- 2009 044 334

## Description

The invention relates to an animal detection apparatus according to the preamble of claim 1.

In prior art animal detection apparatus, two current-conducting plates are respectively placed on opposite sides of a position where an animal may be situated, for example, on opposite sides of a walkway for the animals. When an animal moves to a position between the plates, the capacity formed by the two plates will change. This change can be detected with the aid of the control device, so that in this way the presence of an animal, in this case between the two plates, is detected.

A disadvantage of the known apparatus is that it is a relatively expensive apparatus. Also, the apparatus is relatively vulnerable in view of a required connection between the control device on the one hand and the current-conducting plates on the other. Also, the plates are relatively large, which may be disadvantageous at the stock farm. The invention aims to make it possible to be able to provide a solution for the disadvantages in question and moreover to be able to offer supplementary advantages over the known apparatus.

Accordingly, the invention provides an animal detection apparatus according to claim 1. With such an apparatus, also the identity of an animal can be determined when the respective animal wears an identification label. When the respective animal does not wear an identification label, it can yet be determined that an animal is present with the aid of the current-conducting plates. Preferably, it holds that the antenna for generating an electromagnetic interrogation field is at least substantially in the plane. If the antenna for generating an electromagnetic interrogation field comprises a coil, the coil can extend at least substantially around the at least two plates and/or be at least substantially in the plane. In these manners, the apparatus can still be made of particularly compact design, also when the apparatus comprises the antenna for generating an electromagnetic interrogation field for detecting an identification label.

Due to the plates being in one and the same plane, it is possible, if so desired, to set up the apparatus on a single side of the position where an animal may be situated. This makes connecting the plates with the control device easier. Moreover, it appears that the plates in that case may be configured to be smaller, whereby a detection of an animal can take place, for example, at a 40 cm distance from the plates. Also, in this manner, it is made possible to be able to install the apparatus more simply because the apparatus can be set up on one side of the position where an animal may be situated. Surprisingly, it appears that when the plates are at least substantially in one and the same plane, the presence of an animal can nonetheless be detected very accurately. Preferably, the plates are at least substantially in line with each other and in at least substantially the same plane. The in-line extension of a plate is here understood to be an imaginary two-dimensional extension of the plate in a plane of the plate in which the plate is disposed. Furthermore, it holds in this embodiment that surfaces of the plates are not opposite each other.

Preferably, it holds that the plane is a flat plane.

Furthermore, it preferably holds that a first plate has a surface that is in the range of 10-6,000 cm², preferably in the range of 10-1,000 cm², more preferably in the range of 15-300 cm², in particular in the range of 20-100 cm². Preferably, this also holds for a second plate of the plates.

As a result, the apparatus can be made of very compact design.

Preferably, it holds that the antenna for generating an electromagnetic interrogation field is electrically connected with the control device, the control device and the antenna in combination forming a device for reading out the identification label.

According to an advantageous embodiment, it holds that the apparatus is provided with a housing in which the plates are included and wherein at least a part of the housing is transmissive of electromagnetic radiation for the purpose of the presence detection. As the plates can be included in the housing, the advantage is obtained that the apparatus can be designed to be insensitive to moisture and dirt oftentimes present at a stock farm. If in the known apparatus the plates were to be included in a housing, this would have the consequence of necessitating two housings set up on opposite sides of a walk-through passageway for inclusion of the respective plates. The present invention does not have this disadvantage. In particular, it holds that at least a part and preferably the whole control device is included in the housing. If the whole control device is included in the housing, the housing provides a protection from moisture and dirt for both the plates and the control device, thus rendering the whole apparatus particularly insensitive to dirt and moisture.

According to an advanced embodiment, it holds that the apparatus is further provided with a shielding body which shields the plates on one side of the plane from electromagnetic radiation. This has as an advantage that the plates are only sensitive to the presence of an animal and/or other bodies on one side of the plate, i.e., in use, on the side where the presence of the animal is to be detected. Owing to the shielding body, any bodies or objects located on another side of the plates do not, or hardly, affect the capacity formed by the plates. Also, the shielding body can prevent the antenna for generating an electromagnetic interrogation field from detecting identification labels that are located on the other side of the plates when the antenna for generating an electromagnetic field and the plates are situated on a same side of the shielding body. Preferably, it holds that, preferably, the shielding body is manufactured of a metal and/or is in the form of a plate, preferably an at least substantially planar plate and/or is in the form of a lid, preferably an at least substantially planar lid.

In particular, it holds here that the plate or lid extends at least substantially parallel to the plane. Due to this, too, the apparatus can be made of compact design. Here, it holds, preferably, that the shielding body, at least for a part, is part of the housing. Further, it holds, preferably, that the antenna for generating an electromagnetic interrogation field is included in the housing when the apparatus is provided with such an antenna for generating an electromagnetic interrogation field. The invention also relates to a stock farm (including dairy farms, etc.) comprising a predetermined position where an animal may be situated and an apparatus according to the invention, wherein the apparatus is set up on one side of the predetermined position for determining the presence of an animal at the predetermined position and possibly also for detecting an identification label worn by an animal situated at the predetermined position. JP 9 269379, DE 19803641 and WO 93/08356 each describe an apparatus of a kind similar to that described in the preamble of claim 1. However these apparatuses are not for detecting the presence of animals. Furthermore, WO 2007/064202, JP 2005065606 and EP 0748586 disclose presence detection of cattle using non-contact detectors, such as optical or magnetic detectors, as well as contact detectors, such as pressure-sensitive detectors. The invention will presently be elucidated in more detail with reference to the drawings. In the drawings:
Figure 1 shows an elevation of a first embodiment of an apparatus according to the invention;
Figure 2 shows a transparent view of the apparatus according to Figure 1;
Figure 3 shows an elevation of loose parts of a second embodiment of the apparatus according to the invention;
Figure 4 shows an elevation from a different direction of the parts of Figure 3 plus a bottom;
Figure 5 shows an elevation of a part of Figure 3;
Figure 6 shows the apparatus of Figure 3 in mounted condition;
Figure 7 shows a possible use of an apparatus according to Figure 1 or Figure 3 according to the invention;
Figure 8A shows a possible radiation pattern of the plates according to Figure 1 or 3 without shielding;
Figure 8B shows a possible radiation pattern of plates of the apparatus according to Figure 1 or 3 with shielding;
Figure 9A shows schematically a third embodiment of an apparatus according to the invention in the direction of the arrow P in Figure 9B;
Figure 9B shows schematically an elevation of the apparatus according to Figure 9A in the direction of the arrow R in Figure 9A;
Figure 10A shows schematically a fourth embodiment according to the invention in the direction of the arrow P in Figure 10B; and
Figure 10B shows the apparatus of Figure 10A in the direction of the arrow R in Figure 10A.

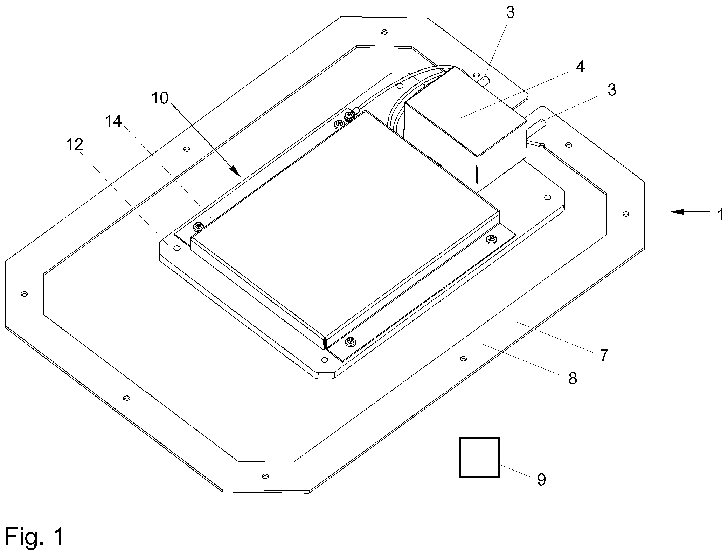

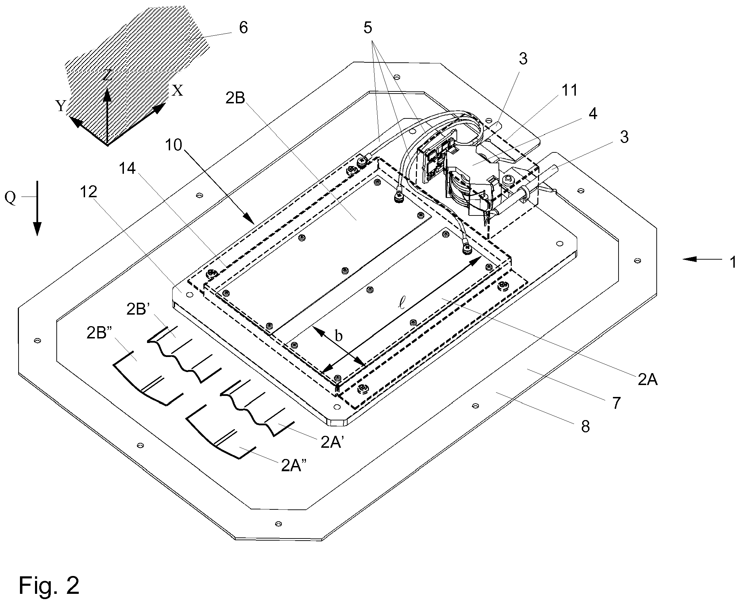

In Figure 1, with reference numeral (1) an apparatus for detecting the presence of an animal in stock farming is shown. As can be seen in Figure 2, the apparatus is provided with two current-conducting plates (2A) and (2B), in combination forming a capacity. Furthermore, the apparatus is provided with a control device (4) which is electrically connected with these plates via cables (5). The control device is arranged for measuring the capacity formed by the plates. The result of the measurement may for instance be exported via a cable (3). Also, the cable (3) may be used to provide the control device (4) with energy. In use, the measured capacity depends on the presence of the animal in the proximity of the plates. The plates (2A) and (2B) are at least substantially in one and the same plane (6) which in Figure 2 is enclosed by the vectors X and Y. In this example, it holds that the plane is a flat plane. Also, it holds in the example that the plates are planar plates. It is not excluded that the plates are not planar and, for example, are in the form of a corrugated plate. Also, it is conceivable that the plates form a part of an imaginary surface of a cylinder or an imaginary surface of a sphere. The plates, therefore, do not need to be perfectly planar. What still applies in that case, however, is that the plates are at least substantially in a same plane, preferably a flat plane. The plane (6) may also be slightly curved, however. In Figure 2, at reference numerals (2A') and (2B'), a part of the plates is configured in the form of a corrugated plate and at reference numerals (2A") and (2B") a part of the plates is configured to form part of an imaginary surface of cylinder. Other shapes are also possible.

In the example, it holds that the plate (2A) has a surface that is in the range of 10-6,000 cm², more particularly in the range of 10 to 500 cm². Moreover, it holds for this plate that it has a surface that is in the range of 15 to 300 cm². More particularly, it holds moreover that the first plate (2A) has a surface that is in the range of 20 to 100 cm². In particular, it holds that the second plate has a surface that is in a same range as a range which the surface of the first plate is in. More particularly, it holds that the first plate has a width (b) of 3 cm and a length (*l*) of 12 cm. The second plate (2B) in the example has the same dimensions as the first plate (2A). Further, it holds in this example that the plates are at least substantially in line with each other. In line with a plate is here understood to refer to an imaginary two-dimensional extension of the plate in a plane of the plate in which the plate is disposed. Furthermore, it holds in this embodiment that surfaces of the plates are not opposite each other.

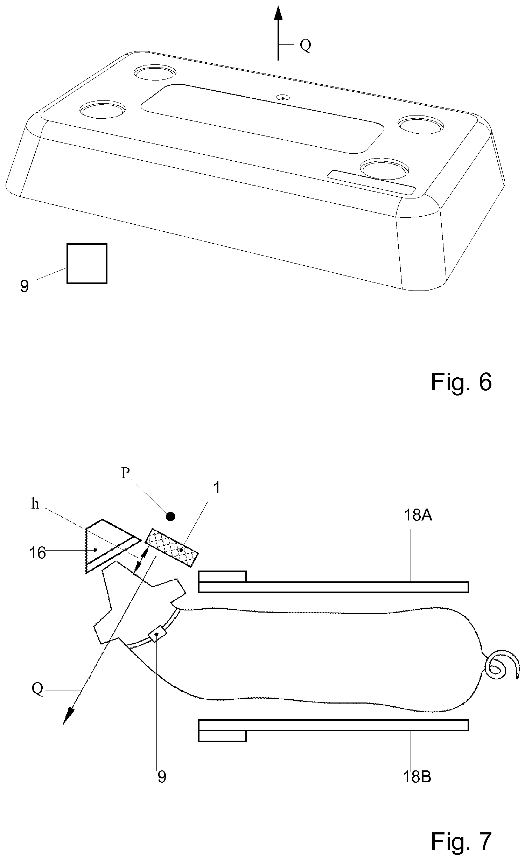

In the example, the apparatus is further provided with an antenna (7) for generating an electromagnetic interrogation field, this antenna having the shape of a coil (8) for detecting an identification label (9) which is worn by an animal (see Figure 7). Preferably, this concerns detecting an identification label that comprises an RFID label. In the example the coil is at least substantially in the plane (6). Also, the coil (8) extends at least substantially around the plates (2A) and (2B). As a result, the apparatus (1) is particularly compact. In this example the coil is provided with a metal strip which forms a single turn. The coil is connected with the control device (4), the control device and the coil in combination forming a device for reading out the identification label (9). Information about an identification label which has been read out can be exported via the cables (3). As can be seen in Figures 1 and 2, the apparatus is further provided with a housing (10) in which the plates are included. The control device is included in a separate housing (11), which, however, is mechanically connected with the housing (10). The housing (10) comprises a bottom plate (12) on which the plates (2A) and (2B) as well as the separate housing (11) are mounted. Furthermore, the housing (10) comprises a lid (14) which is mounted on the bottom plate (12). The lid (14) is manufactured of a metal and thus forms a shielding body (24) which shields the plates (2A) and (2B) on one side of the plane (6) (which side is indicated with the vector Z) against electromagnetic radiation. The rest of the housing, including the bottom plate (12), is manufactured from a synthetic which does not form a shield for electromagnetic radiation. A consequence of this is that an animal situated on this side of the plane (6) hardly, if at all, affects the magnitude of the capacity formed by the plates. The presence of animals on the side of the plane (6) indicated with the vector Z hence is not or substantially not measured with the apparatus (1). Only when the animal is situated on the other side of the plane (6) (indicated with the vector Q) is the presence of the animal (properly) measured. Also, as a result of the lid (14), the apparatus is insensitive to detecting identification labels that are located on the side of the plane (6) indicated with the vector Z. Only when an identification label is located on the other side of the plane (indicated with the vector Q) can the identification label be properly detected. In the example, the shielding body concerned is therefore in the form of a lid. It concerns here an at least substantially planar lid. Furthermore, it holds that the lid extends at least substantially parallel to the plane (6). Moreover, it holds that the lid is part of the housing (10). Furthermore, the lid is manufactured of an electroconductive metal.

In Figure 7 a possible use of the apparatus according to Figure 1 is shown. The apparatus of Figure 1 is here used at the stock farm and is placed near a trough (16) for feeding the animals. An animal can approach the trough (16) by walking along a walkway which is partly formed by two fences (18A) and (18B) and ends at the trough (16). This end point of the walkway constitutes a predetermined position where the presence of an animal can be determined with the apparatus (1). The presence of the animal at a distance (h) from the apparatus (1), which in the example may vary from 4 to 14 cm, can be determined with the aid of the apparatus (1). In particular, the head of the animal is detected when the animal is near the trough (16), i.e., at a position where the animal may be situated. Also, the identification label (9) may be read out when the animal is situated at the predetermined position shown in Fig. 7. At this position, with the aid of the control device and the coil, an electromagnetic interrogation field is generated for reading out such labels. The stock farm described hence comprises a predetermined position (as shown near the trough) where an animal may be situated and the apparatus (1), with the apparatus set up on one side of the predetermined position.

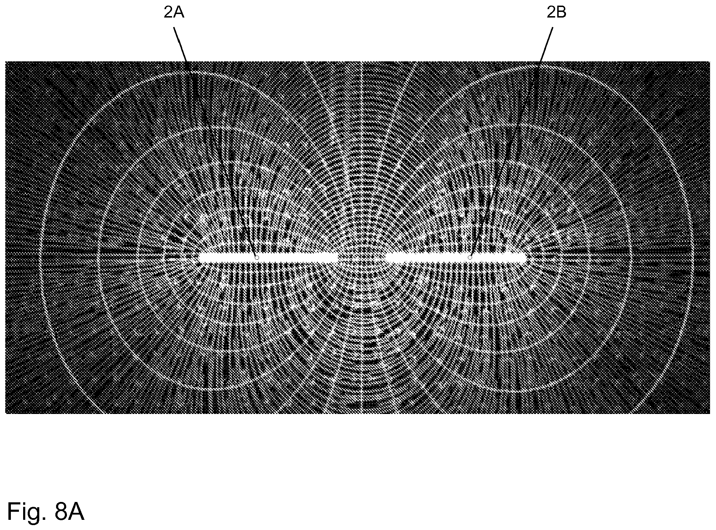

Figure 8a shows a field generated with the aid of the control device (4) and the plates (2A) and (2B) for measuring a capacity formed by the plates (2A) and (2B), when the respective shielding body in the form of the lid (14) is not present. The field concerned extends on both sides of the plates. A consequence is that in Figure 7 a presence of an animal could also be detected at the position (P).

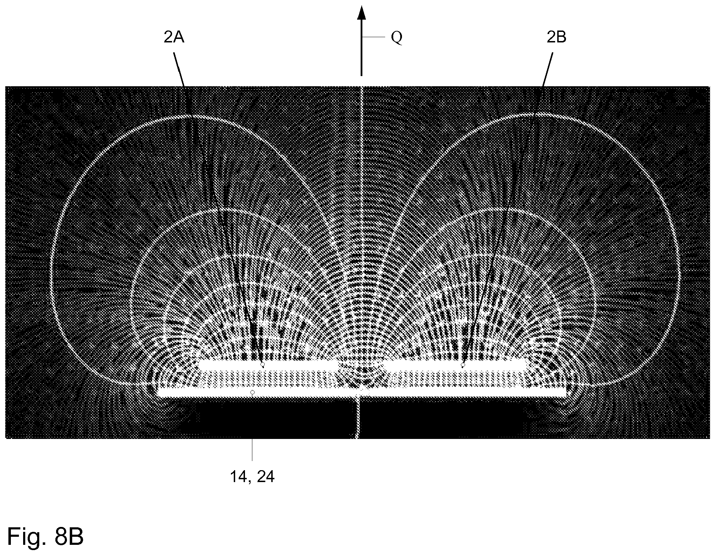

In Figure 8B, however, the field is shown when the lid (14) is present. It appears that the field extends substantially in the direction (Q) which is shown in Figure 7 and Figure 8.

For that matter, according to the invention, the capacity formed by the plates can be measured by applying an alternating voltage to the plates with the aid of the control device. By measuring the magnitude of the alternating current the value of the capacity can be determined. This value depends on whether or not an animal is present in the proximity of the plates (2A) and (2B). Under the influence of the alternating current, the plates will emit electromagnetic radiations as shown in Figures 8A and 8B.

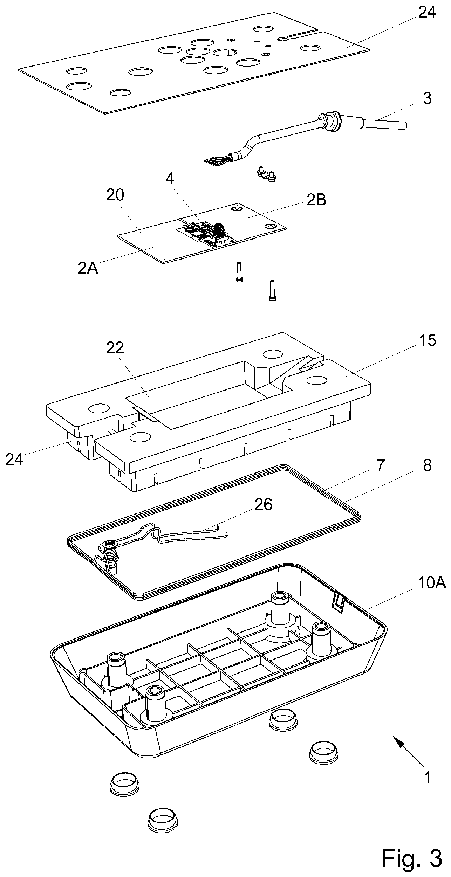

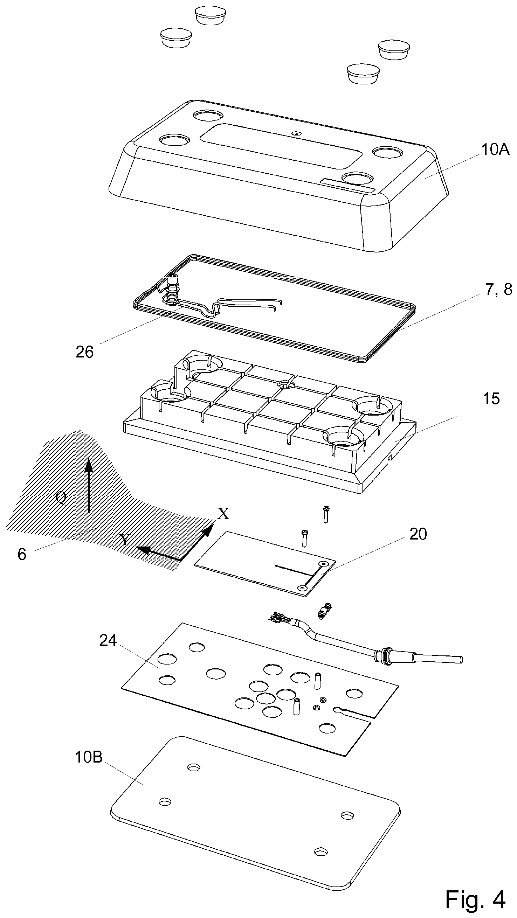

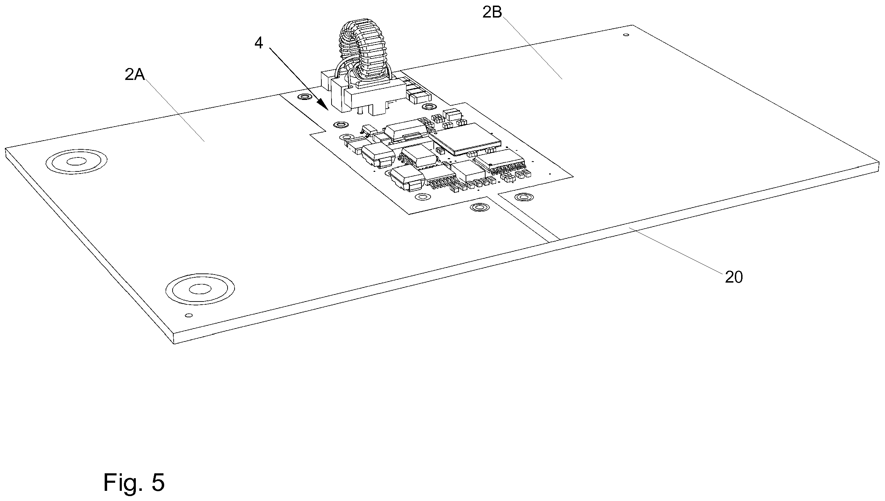

In Figures 3 to 6 a second embodiment according to the invention is shown. Parts of the first embodiment and of the second embodiment that correspond to each other are provided with a same reference numeral. The apparatus is provided with a first plate (2A) and a second plate (2B) which form a capacity. As shown in Figure 5, the apparatus is provided with a printed circuit board or plate (20), known per se, on which two separate copper faces (2A) and (2B) are arranged which form the current-conducting plates (2A) and (2B). Furthermore, on the printed circuit board (20) the control device (4) is arranged. The control device is electrically connected with the plates (2A) and (2B) for measuring the capacity formed by the plates, as has been set out with reference to Figures 1 and 2. The plates (2A) and (2B) as well as the control device (4) are accommodated in a housing (10). In this example, the housing consists of a lid (10A) and bottom (10B) (see Figure 4). The lid (10A) is manufactured from a material such as a synthetic which passes electromagnetic radiation. This can also apply to the bottom (10B). The plate (20) is received in a receiving space (22) of the inner housing (15). The control device (4) is connected with a cable (3). The apparatus is further provided with a coil (8) which in mounted condition extends around the inner housing (15), at least, the lower portion (24) thereof as shown in Figure 3. Also the inner housing (15) is manufactured from a material such as a synthetic which is transmissive of electromagnetic radiation. The coil (8) in this example is provided with multiple wire turns. The coil (8) which extends around the inner housing (15) and the printed circuit board (20) which is in the receiving space (22) are thereupon received in the housing (10) which is formed by the lid (10A) and the bottom (10B). Furthermore taken up in the housing (10) is a shielding body (24) which is made of a metal, in this example aluminum. The shielding body is in the form of a plate, in this example an at least substantially planar plate. In mounted condition the plate (20) is at least substantially in the plane (6) (see Figure 4). With this, the flat plates (2A) and (2B) likewise are at least substantially in the same flat plane (6). Further, it holds in this example that the plates are at least substantially in line with each other. Furthermore, it holds in this embodiment that surfaces of the plates are not opposite each other. The dimensions of the first plate (2A) with the second plate (2B) are similar to those discussed with reference to Figures 1 and 2 for the first embodiment. The coil is also at least substantially in the plane (6). The coil in mounted condition likewise extends at least substantially around the first plate (2A) and the second plate (2B). The coil in this example is electrically connected with the control device (4), while the control device and the coil in combination form a device for reading out an identification label. The housing (10) which is formed by the partial housings (10A) and (10B) accommodates the plates (2A) and (2B), the coil (8), as well as the control device (4). The shielding body is also situated in the housing and in this example is not part of the housing in question. The apparatus in mounted condition has a form as shown in Figure 6 and can be mounted as shown in Figure 7. Corresponding directions in Figure 6 and Figure 7 are indicated with the arrow Q. The result is again that only on one side of the plane, which is indicated with the arrow Q, is the apparatus according to Figures 3 to 6 sensitive to detecting the presence of an animal with the aid of the plates. Moreover, only on one side of the plane, which is indicated with the arrow Q, is the apparatus according to Figures 3 to 6 sensitive to detecting the presence of an identification label with the aid of the coil (8).

In Figure 8B the shielding body (24) is schematically indicated with reference numeral (24). The wiring by which the coil (8) is electrically connected with the control device (4) is indicated in Figure 4 with reference numeral (26).

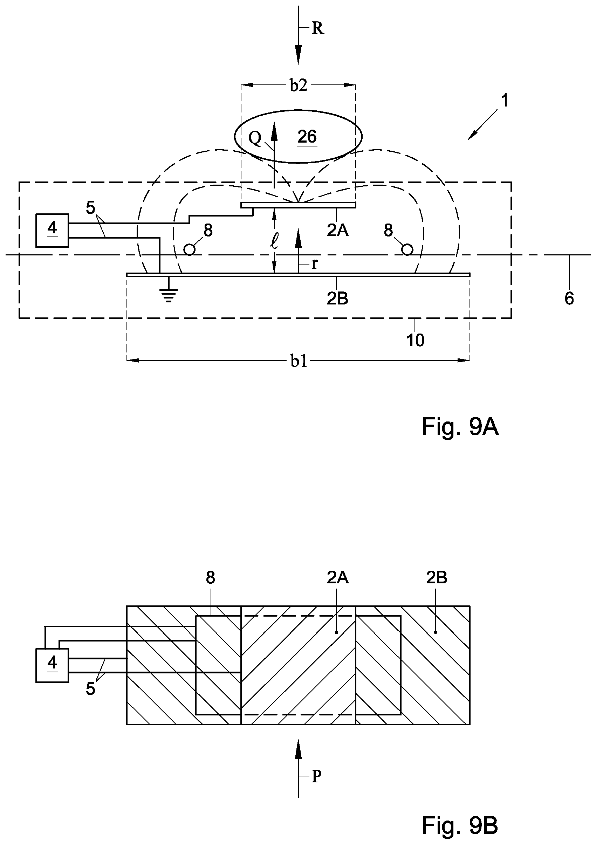

In Figure 9, with reference numeral (1) a third embodiment of an apparatus according to the invention is indicated. In this apparatus it holds that the plates (2A) and (2B) are located at a relatively short distance (*l*) from each other. The distance (*l*) may vary, for example, from 2 to 40 cm. The plates (2A) and (2B) are included in a housing (10). As can be seen, it holds that the surfaces of the plates partly overlap viewed in a direction (r) perpendicular to a part of a surface of one of the plates. In this case this direction (r) is indicated with respect to the plate (2B). Because the surfaces partly overlap, i.e., because in the example of Figure 9A the plates have mutually different dimensions, the presence of an animal (26) can on one side of the housing (10), i.e., on one side of the plate (2A) which is remote from the plate (2B), be properly determined by performing a capacitive measurement with the aid of the plates as has been described hereinabove. It holds in the example that the plate (2B) has a width (b1) that is greater than the width (b2) of the plate (2A). In this example the lengths of the plates, which in this example extend at right angles to the plane of the paper, are equal to each other. So, it holds that the plates have mutually different dimensions. Further, it holds that the magnitudes of the surfaces of the plates differ from each other. Further, the apparatus according to Figure 9A may be provided with an antenna (7) as discussed hereinbefore. This antenna (7) like the coil (8) may be at least substantially in the plane (6). If the antenna (7) is in the form of a coil (8) the coil can extend around the plate (2A) (see Figures 9A and 9B). The plate (2A), (2B) and the antenna (7) may again be included in a housing (10). The housing (11) is manufactured of a material such as a synthetic that passes electromagnetic radiation. Also for the apparatus of Figures 9A, 9B it holds that it can be used as indicated in Figure 7, the direction (Q) in Figure 7 corresponding to the direction (Q) indicated in Figure 9. Also for the plates of Figure 9 it holds that they are at least substantially in a same plane (6) in that the plates are located relatively close to each other and are included in one and the same housing.

The invention is not limited in any way to the embodiments outlined hereinbefore. Also in the apparatus according to Figures 3 and 6, the plates can take forms different from that of a planar plate. To be considered here, again, are corrugated plates and other forms as has been discussed hereinbefore. What is relevant, however, is that the plates can be set up next to each other and then extend at least substantially in a plane, preferably a flat plane.

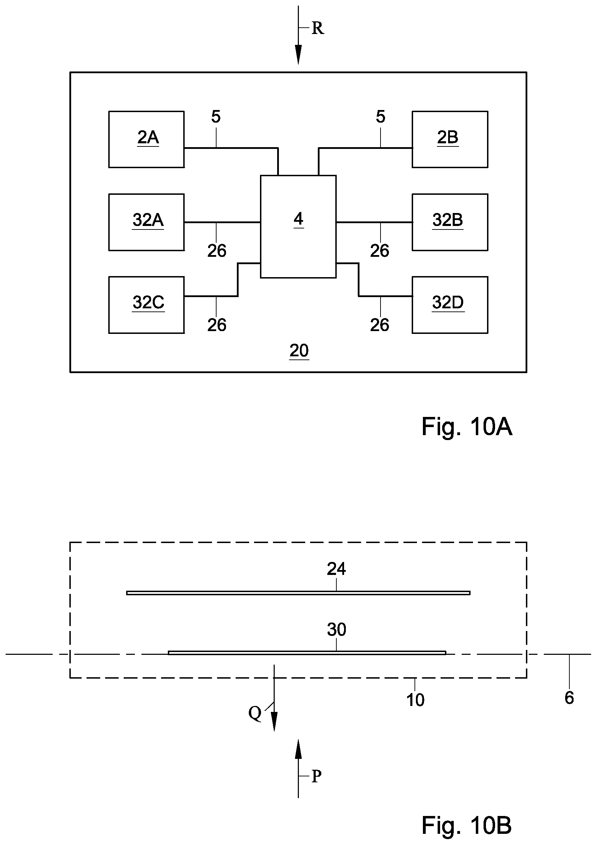

Also, the antenna for generating the interrogation field (7) can take forms different from a coil (8). The antenna may also be provided with at least one current-conducting plate such as at least one metal plate or be provided with at least one current-conducting plate that forms a UHF antenna, such as at least one metal plate. In Figure 10 such a variant is shown, corresponding parts in the figures being provided with a same reference numeral. The apparatus according to Figure 10 is provided with an insulating plate (20) such as a printed circuit board on which the plates (2A) and (2B) are arranged. Also the control device (4) that is connected with the plates (2A) and (2B) via cables (5) is arranged on the plate (20). The plate (30) is in the plane (6). Furthermore, on the plate (20) four current-conducting plates (32A), (32B), (32C), (32D) are arranged which are each manufactured of metal and in combination form a UHF antenna for generating the interrogation field for detecting an identification label (9). The current-conducting plates (32A), (32B), (32C), (32D) are again connected with the control device (4), via cables (26). The apparatus is further provided with a shielding body (24) in the form of a metal plate. The plates (2A) and (2B) in combination forming a capacity, and the current-conducting plates (32A), (32B), (32C), (32D) with which the interrogation field is generated are at least substantially in line with each other and in at least substantially the same plane (6). The apparatus according to Figures 10A, 10B is further provided with a shielding body (24) which shields the plates (2A), (2B) in combination forming a capacity on one side of the plane (6) from electromagnetic radiation. The apparatus according to Figures 10A, 10B is further provided with a shielding body (24) which shields the antenna (32A), (32B), (32C), (32D) for generating the interrogation field, on one (same) side of the plane (6) from electromagnetic radiation. In this example, it holds that the shielding body (24) which shields the plates in combination forming a capacity from electromagnetic radiation on one side of the plane is the same as the shielding body (24) which shields the antenna for generating an electromagnetic interrogation field from electromagnetic radiation on one side of the plane, the plates (2A), (2B) in combination forming a capacity being shielded on a same side of the plane as the antenna (32A), (32B), (32C), (32D) for generating the interrogation field. The shielding body in this example is manufactured of a metal and takes the form of a plate (24). The plate (24) extends at least substantially parallel to the plane (6). In this example the plate (24) and the plate (30) are included in a housing (10). In use, the apparatus as described on the basis of the above-mentioned embodiments can also be used at a different position in the proximity of a trough. For example, the apparatus could also be mounted on a fence (18A) or (18B) for detecting the presence of an animal advancing between the fences (18A) and (18B). Determining the presence of the animal can then be carried out with the aid of the plates (2A) and (2B) and the control device (4). Moreover, if the animal wears an identification label, the identification label may be read out with the aid of the identification device which is formed by the control device (4) and the coil (8). Also, it may be that the apparatus is provided not with such an identification device but only with a device for detecting the presence of an animal, hence only with the plates (2A) and (2B) and the control device (4). Such variants are each understood to fall within the framework of the invention.

When the apparatus is used for detecting the presence of an animal, it may also be used for counting the number of animals that, for example, pass between the fences (18A) and (18B). Such variants are also understood to fall within the framework of the invention.

## Claims

1. An animal detection apparatus arranged for detecting the presence of an animal in stock farming, the apparatus provided with an antenna (7) for generating an electromagnetic interrogation field for detecting an identification label which is worn by an animal, wherein preferably the identification label comprises an RFID label (9), **characterised in that** the apparatus is provided with at least two current-conducting plates (2A, 2B) in combination forming a capacity and a control device (4) electrically connected with these plates for measuring the capacity formed by the plates, wherein, in use, the measured capacity depends on the presence of an animal in the proximity of the plates, and wherein the plates are at least substantially in one and the same plane.

2. An animal detection apparatus according to claim 1, **characterized in that** the plane is a flat plane.

3. An animal detection apparatus according to claim 1 or 2, **characterized in that** a first plate and preferably also a second plate of the plates each have a surface which is in the range of 10-6,000 cm², preferably in the range of 10-1,000 cm², more preferably in the range of 15-300 cm², in particular in the range of 20-100 cm².

4. An animal detection apparatus according to any preceding claim, **characterized in that** the antenna for generating an electromagnetic interrogation field is at least substantially in the plane and/or extends at least substantially around the at least two plates.

5. An animal detection apparatus according to claim 4 , **characterized in that** the antenna for generating the interrogation field is provided with coil such as a metal wire which forms a multiplicity of turns or a metal strip which forms a single turn or is provided with at least one current-conducting plate or is provided with at least one current conducting plate which forms a UHF antenna.

6. An animal detection apparatus according to any one of the preceding claims, **characterized in that** the antenna for generating the interrogation field is electrically connected with the control device, wherein the control device and the antenna for generating the interrogation field in combination form a device for reading out the identification label.

7. An animal detection apparatus according to any one of the preceding claims, **characterized in that** the apparatus is provided with a housing (10) in which the plates in combination forming a capacity are included.

8. An animal detection apparatus according to claim 7, **characterized in that** the housing is at least for a part manufactured of an at least substantially non-current conducting material such as a synthetic, for example, plastic.

9. An animal detection apparatus according to any one of the preceding claims 7-8, **characterized in that** at least a part of the control device and preferably the whole control device is included in the housing.

10. An animal detection apparatus according to any one of the preceding claims, **characterized in that** the apparatus is further provided with a first shielding body (24) which shields the plates in combination forming a capacity from electromagnetic radiation on one side of the plane.

11. An animal detection apparatus according to any one of claims 1-10, **characterized in that** the apparatus is further provided with a second shielding body (24) which shields the antenna for generating the interrogation field from electromagnetic radiation on one side of the plane.

12. An animal detection apparatus according to claims 10 and 11, **characterized in that** the first shielding body which shields the plates in combination forming a capacity from electromagnetic radiation on one side of the plane is the same as the second shielding body which shields the antenna for generating an electromagnetic interrogation field from electromagnetic radiation on one side of the plane, wherein the plates in combination forming a capacity are shielded on a same side of the plane as the antenna for generating the interrogation field.

13. An animal detection apparatus according to claim 10, 11, or 12, **characterized in that** the shielding body is preferably manufactured of a metal and/or is in the form of a plate, preferably an at least substantially planar plate and/or is in the form of a lid, preferably an at least substantially planar lid.

14. An animal detection apparatus according to claim 13, **characterized in that** the plate or lid extends at least substantially parallel to the plane.

15. An animal detection apparatus according to any one of the preceding claims 7-9 and according to any one of the preceding claims 10-14, **characterized in that** the shielding body, in particular the plate or lid, at least for a part forms part of the housing.

16. An animal detection apparatus according to any one of claims 7-9 or 15, **characterized in that** the antenna for generating the interrogation field is included in the housing.

17. An animal detection apparatus according to any one of the preceding claims, **characterized in that** the plates in combination forming a capacity are at least substantially in line with each other in at least substantially the same plane.

18. An animal detection apparatus according to any one of the preceding claims, **characterized in that** surfaces of the plates in combination forming a capacity are not located opposite each other.

19. An animal detection apparatus according to any one of the preceding claims 1-16, **characterized in that** the surfaces of the plates in combination forming a capacity partly overlap viewed in a direction perpendicular to a part of a surface of one of the plates in combination forming a capacity.

20. An animal detection apparatus according to any one of the preceding claims, **characterized in that** the plates in combination forming a capacity have mutually different dimensions and/or that the magnitudes of the surfaces of the plates in combination forming a capacity differ from each other.

21. An animal detection apparatus according to claims 4 and 5, **characterized in that** the antenna for generating the interrogation field is provided with at least one current-conducting plate, in particular at least one current-conducting plate which forms an UHF antenna, wherein the plates in combination forming a capacity and the at least one current-conducting plate with which the interrogation field is generated are at least substantially in line with each other in at least substantially the same plane.

22. A stock farm comprising a predetermined position where an animal may be situated and an apparatus according to any one of the preceding claims wherein the apparatus is set up on one side of the predetermined position.

## Patentansprüche

1. Tiererfassungsvorrichtung zum Erfassen des Vorhandenseins eines Tieres in der Viehzucht, wobei die Vorrichtung mit einer Antenne zum Erzeugen eines elektromagnetischen Abfragefeldes zum Erfassen eines Identifikationsetiketts versehen ist, das von einem Tier getragen wird, wobei das Identifikationsetikett vorzugsweise ein RFID-Etikett (9) umfasst, **dadurch gekennzeichnet, dass** die Vorrichtung mit wenigstens zwei stromleitenden Platten (2A, 2B) versehen ist, die in Kombination eine Kapazität bilden, und einer Steuervorrichtung (4), die mit diesen Platten elektrisch verbunden ist, um die von den Platten gebildete Kapazität zu messen, wobei die gemessene Kapazität bei Gebrauch von der Anwesenheit eines Tieres in der Nähe der Platten abhängt, und wobei sich die Platten wenigstens im Wesentlichen in einer und derselben Ebene befinden.

2. Tiererfassungsvorrichtung nach Anspruch 1, **dadurch gekennzeichnet, dass** die Ebene eine flache Ebene ist.

3. Tiererfassungsvorrichtung nach Anspruch 1 oder 2, **dadurch gekennzeichnet, dass** eine erste Platte und vorzugsweise auch eine zweite Platte der Platten jeweils eine Oberfläche aufweisen, die im Bereich von 10 bis 6.000 cm² liegt, vorzugsweise im Bereich von 10 bis 1000 cm², bevorzugter im Bereich von 15 bis 300 cm², insbesondere im Bereich von 20 bis 100 cm².

4. Tiererfassungsvorrichtung nach einem der vorhergehenden Ansprüche, **dadurch gekennzeichnet, dass** die Antenne zum Erzeugen eines elektromagnetischen Abfragefeldes wenigstens im Wesentlichen in der Ebene liegt und/oder sich wenigstens im Wesentlichen um die wenigstens zwei Platten herum erstreckt.

5. Tiererfassungsvorrichtung nach Anspruch 4, **dadurch gekennzeichnet, dass** die Antenne zum Erzeugen des Abfragefeldes mit einer Spule wie einem Metalldraht versehen ist, der eine Vielzahl von Windungen bildet, oder einem Metallstreifen, der eine einzige Windung bildet oder mit wenigstens einer stromleitenden Platte oder ist mit wenigstens einer stromleitenden Platte versehen ist, die eine UHF-Antenne bildet.

6. Tiererfassungsvorrichtung nach einem der vorhergehenden Ansprüche, **dadurch gekennzeichnet, dass** die Antenne zum Erzeugen des Abfragefeldes elektrisch mit der Steuervorrichtung verbunden ist, wobei die Steuervorrichtung und die Antenne zum Erzeugen des Abfragefeldes in Kombination eine Vorrichtung zum Lesen aus dem Identifikationsetikett bilden.

7. Tiererfassungsvorrichtung nach einem der vorhergehenden Ansprüche, **dadurch gekennzeichnet, dass** die Vorrichtung mit einem Gehäuse (10) versehen ist, in dem die Platten, die in Kombination eine Kapazität bilden, enthalten sind.

8. Tiererfassungsvorrichtung nach Anspruch 7, **dadurch gekennzeichnet, dass** das Gehäuse wenigstens für einen Teil aus einem wenigstens im Wesentlichen nicht stromleitenden Material, wie beispielsweise einem Kunststoff, hergestellt ist.

9. Tiererfassungsvorrichtung nach einem der vorhergehenden Ansprüche 7 bis 8, **dadurch gekennzeichnet, dass** wenigstens ein Teil der Steuervorrichtung und vorzugsweise die gesamte Steuervorrichtung in dem Gehäuse enthalten ist.

10. Tiererfassungsvorrichtung nach einem der vorhergehenden Ansprüche, **dadurch gekennzeichnet, dass** die Vorrichtung ferner mit einem ersten Abschirmkörper (24) versehen ist, der die Platten, die in Kombination eine Kapazität bilden, gegen elektromagnetische Strahlung auf einer Seite der Ebene abschirmt.

11. Tiererfassungsvorrichtung nach einem der Ansprüche 1 bis 10, **dadurch gekennzeichnet, dass** die Vorrichtung ferner mit einem zweiten Abschirmkörper (24) versehen ist, der die Antenne zum Erzeugen des Abfragefeldes gegen elektromagnetische Strahlung auf einer Seite der Ebene abschirmt.

12. Tiererfassungsvorrichtung nach den Ansprüchen 10 und 11, **dadurch gekennzeichnet, dass** der erste Abschirmkörper, der die Platten, die in Kombination eine Kapazität bilden, gegen elektromagnetische Strahlung auf einer Seite der Ebene abschirmt, derselbe ist wie der zweite Abschirmkörper, der die Antenne zum Erzeugen eines elektromagnetischen Abfragefeldes aus elektromagnetischer Strahlung auf einer Seite der Ebene abschirmt, wobei die Platten, die in Kombination eine Kapazität bilden, auf derselben Seite der Ebene wie die Antenne zur Erzeugung des Abfragefeldes abgeschirmt sind.

13. Tiererfassungsvorrichtung nach Anspruch 10, 11 oder 12, **dadurch gekennzeichnet, dass** der Abschirmkörper vorzugsweise aus einem Metall gefertigt ist und/oder die Form einer Platte aufweist, vorzugsweise einer wenigstens im Wesentlichen ebenen Platte und/oder die Form eines Deckels aufweist, vorzugsweise eines wenigstens im Wesentlichen ebenen Deckels.

14. Tiererfassungsvorrichtung nach Anspruch 13, **dadurch gekennzeichnet, dass** sich die Platte oder der Deckel wenigstens im Wesentlichen parallel zur Ebene erstreckt.

15. Tiererfassungsvorrichtung nach einem der vorhergehenden Ansprüche 7 bis 9 und nach einem der vorhergehenden Ansprüche 10 bis 14, **dadurch gekennzeichnet, dass** der Abschirmkörper, insbesondere die Platte oder der Deckel, wenigstens teilweise einen Teil des Gehäuses bildet.

16. Tiererfassungsvorrichtung nach einem der Ansprüche 7 bis 9 oder 15, **dadurch gekennzeichnet, dass** die Antenne zum Erzeugen des Abfragefeldes in dem Gehäuse enthalten ist.

17. Tiererfassungsvorrichtung nach einem der vorhergehenden Ansprüche, **dadurch gekennzeichnet, dass** die Platten, die in Kombination eine Kapazität bilden, wenigstens im Wesentlichen aufeinander abgestimmt in der wenigstens im Wesentlichen gleichen Ebene zueinander liegen.

18. Tiererfassungsvorrichtung nach einem der vorhergehenden Ansprüche, **dadurch gekennzeichnet, dass** sich die Oberflächen der Platten, die in Kombination eine Kapazität bilden, nicht einander gegenüberliegen.

19. Tiererfassungsvorrichtung nach einem der vorhergehenden Ansprüche 1 bis 16, **dadurch gekennzeichnet, dass** die Oberflächen der Platten, die in Kombination eine Kapazität bilden, sich teilweise überlappen, gesehen in einer Richtung senkrecht zu einem Teil einer Oberfläche einer der Platten, die in Kombination eine Kapazität bilden.

20. Tiererfassungsvorrichtung nach einem der vorhergehenden Ansprüche, **dadurch gekennzeichnet, dass** die Platten, die in Kombination eine Kapazität bilden, voneinander verschiedene Abmessungen haben und/oder dass sich die Größen der Oberflächen der Platten, die in Kombination eine Kapazität bilden, voneinander unterscheiden.

21. Tiererkennungsvorrichtung nach den Ansprüchen 4 und 5, **dadurch gekennzeichnet, dass** die Antenne zur Erzeugung des Abfragefeldes mit wenigstens einer stromleitenden Platte, insbesondere wenigstens einer stromleitenden Platte, versehen ist, die eine UHF-Antenne bildet, wobei die Platten, die in Kombination eine Kapazität bilden, und die wenigstens eine stromleitende Platte, mit der das Abfragefeld erzeugt wird, wenigstens im Wesentlichen aufeinander abgestimmt in der wenigstens im Wesentlichen gleichen Ebene zueinander liegen.

22. Viehzucht mit einer vorbestimmten Position, an der sich ein Tier befinden kann, und einer Vorrichtung nach einem der vorhergehenden Ansprüche, wobei die Vorrichtung auf einer Seite der vorbestimmten Position eingerichtet ist.

## Revendications

1. Appareil de détection d'animal conçu pour détecter la présence d'un animal en élevage, l'appareil étant pourvu d'une antenne (7) destinée à générer un champ d'interrogation électromagnétique pour détecter une étiquette d'identification qui est portée par un animal, l'étiquette d'identification comprenant de préférence une étiquette RFID (9), **caractérisé en ce que** l'appareil est pourvu d'au moins deux plaques conductrices de courant (2A, 2B) formant en combinaison une capacité et d'un dispositif de commande (4) connecté électriquement à ces plaques pour mesurer la capacité formée par les plaques, la capacité mesurée dépendant, lors de l'utilisation, de la présence d'un animal à proximité des plaques, et les plaques étant au moins sensiblement dans un seul et même plan.

2. Appareil de détection d'animal selon la revendication 1, **caractérisé en ce que** le plan est un plan plat.

3. Appareil de détection d'animal selon la revendication 1 ou 2, **caractérisé en ce qu'**une première plaque et de préférence une deuxième plaque aussi parmi les plaques ont chacune une surface qui est comprise dans la plage de 10 à 6000 cm², de préférence dans la plage de 10 à 1000 cm², de préférence encore dans la plage de 15 à 300 cm², en particulier dans la plage de 20 à 100 cm².

4. Appareil de détection d'animal selon l'une quelconque des revendications précédentes, **caractérisé en ce que** l'antenne destinée à générer un champ d'interrogation électromagnétique est au moins sensiblement dans le plan et/ou s'étend au moins sensiblement autour des au moins deux plaques.

5. Appareil de détection d'animal selon la revendication 4, **caractérisé en ce que** l'antenne destinée à générer le champ d'interrogation est pourvue d'une bobine telle qu'un fil métallique qui forme de multiples spires ou un ruban métallique qui forme une seule spire ou est pourvue d'au moins une plaque conductrice de courant ou est pourvue d'au moins une plaque conductrice de courant qui forme une antenne UHF.

6. Appareil de détection d'animal selon l'une quelconque des revendications précédentes, **caractérisé en ce que** l'antenne destinée à générer le champ d'interrogation est connectée électriquement au dispositif de commande, le dispositif de commande et l'antenne destinée à générer le champ d'interrogation formant en combinaison un dispositif destiné à lire l'étiquette d'identification.

7. Appareil de détection d'animal selon l'une quelconque des revendications précédentes, **caractérisé en ce que** l'appareil est pourvu d'un boîtier (10) dans lequel les plaques formant en combinaison une capacité sont incluses.

8. Appareil de détection d'animal selon la revendication 7, **caractérisé en ce que** le boîtier est au moins en partie fabriqué en une matière au moins sensiblement non conductrice de courant telle qu'une matière synthétique, par exemple du plastique.

9. Appareil de détection d'animal selon l'une quelconque des revendications précédentes 7 à 8, **caractérisé en ce qu'**au moins une partie du dispositif de commande et de préférence le dispositif de commande entier est inclus dans le boîtier.

10. Appareil de détection d'animal selon l'une quelconque des revendications précédentes, **caractérisé en ce que** l'appareil est en outre pourvu d'un premier corps de blindage (24) qui protège les plaques formant en combinaison une capacité contre le rayonnement électromagnétique d'un côté du plan.

11. Appareil de détection d'animal selon l'une quelconque des revendications 1 à 10, **caractérisé en ce que** l'appareil est en outre pourvu d'un deuxième corps de blindage (24) qui protège l'antenne destinée à générer le champ d'interrogation contre le rayonnement électromagnétique d'un côté du plan.

12. Appareil de détection d'animal selon les revendications 10 et 11, **caractérisé en ce que** le premier corps de blindage qui protège les plaques formant en combinaison une capacité contre le rayonnement électromagnétique d'un côté du plan est le même que le deuxième corps de blindage qui protège l'antenne destinée à générer un champ d'interrogation électromagnétique contre le rayonnement électromagnétique d'un côté du plan, les plaques formant en combinaison une capacité étant protégées d'un même côté du plan que l'antenne destinée à générer le champ d'interrogation.

13. Appareil de détection d'animal selon la revendication 10, 11 ou 12, **caractérisé en ce que** le corps de blindage est de préférence fabriqué en un métal et/ou prend la forme d'une plaque, de préférence une plaque au moins sensiblement plane et/ou prend la forme d'un couvercle, de préférence un couvercle au moins sensiblement plan.

14. Appareil de détection d'animal selon la revendication 13, **caractérisé en ce que** la plaque ou le couvercle s'étend au moins sensiblement parallèlement au plan.

15. Appareil de détection d'animal selon l'une quelconque des revendications précédentes 7 à 9 et selon l'une quelconque des revendications précédentes 10 à 14, **caractérisé en ce que** le corps de blindage, en particulier la plaque ou le couvercle, forme au moins en partie une partie du boîtier.

16. Appareil de détection d'animal selon l'une quelconque des revendications 7 à 9 ou 15, **caractérisé en ce que** l'antenne destinée à générer le champ d'interrogation est incluse dans le boîtier.

17. Appareil de détection d'animal selon l'une quelconque des revendications précédentes, **caractérisé en ce que** les plaques formant en combinaison une capacité sont au moins sensiblement alignées l'une avec l'autre dans au moins sensiblement le même plan.

18. Appareil de détection d'animal selon l'une quelconque des revendications précédentes, **caractérisé en ce que** des surfaces des plaques formant en combinaison une capacité ne sont pas situées en regard l'une de l'autre.

19. Appareil de détection d'animal selon l'une quelconque des revendications précédentes 1 à 16, **caractérisé en ce que** les surfaces des plaques formant en combinaison une capacité se chevauchent partiellement vues dans une direction perpendiculaire à une partie d'une surface de l'une des plaques formant en combinaison une capacité.

20. Appareil de détection d'animal selon l'une quelconque des revendications précédentes, **caractérisé en ce que** les plaques formant en combinaison une capacité ont des dimensions mutuellement différentes et/ou **en ce que** les valeurs des surfaces des plaques formant en combinaison une capacité diffèrent l'une de l'autre.

21. Appareil de détection d'animal selon les revendications 4 et 5, **caractérisé en ce que** l'antenne destinée à générer le champ d'interrogation est pourvue d'au moins une plaque conductrice de courant, en particulier au moins une plaque conductrice de courant qui forme une antenne UHF, les plaques formant en combinaison une capacité et l'au moins une plaque conductrice de courant avec laquelle le champ d'interrogation est généré étant au moins sensiblement alignées l'une avec l'autre dans au moins sensiblement le même plan.

22. Ferme d'élevage comprenant une position prédéterminée où un animal peut être situé et un appareil selon l'une quelconque des revendications précédentes, l'appareil étant installé d'un côté de la position prédéterminée.
